# EUROPEAN PATENT APPLICATION

(11) **EP 4 694 342 A1**
(43) Date of publication of application: **11.02.2026**
(21) Application number: 25190853.9
(22) Date of filing: 22.07.2025
(51) Int. Cl.: H04W 36/00, H04W 36/08, H04W 36/18

(54) **NETWORK DEVICE**

(30) Priority: 05.08.2024 US 202418794910
(71) Applicant: NXP USA, Inc., Austin, TX 78735 (US)
(72) Inventor: Syang, Jinwun, 5656AG Eindhoven (NL)
(74) Representative: Colaiuda, Antonella

(57) **Abstract**

One example discloses a network destination device: wherein the network destination device is configured to receive a handover message from a network source device; wherein the network source device is identified by a first network address; wherein the network destination device is identified by a second network address; wherein the handover message is configured to initiate a transfer of a user device from the network source device to the network destination device; wherein the network destination device is configured to communicate with the user device using both the first network address and the second network address.

## Description

The present specification relates to systems, methods, apparatuses, devices, articles of manufacture and instructions for user device handover between multiple network devices.

### SUMMARY

According to an example embodiment, a network destination device, comprising: wherein the network destination device is configured to receive a handover message from a network source device; wherein the network source device is identified by a first network address; wherein the network destination device is identified by a second network address; wherein the handover message is configured to initiate a transfer of a user device from the network source device to the network destination device; and wherein the network destination device is configured to communicate with the user device using both the first network address and the second network address.

In another example embodiment, the network destination device is configured to communicate with the user device using the first network address after receiving the handover message.

In another example embodiment, the handover message triggers a handover procedure between the network source device and the network destination device.

In another example embodiment, the network destination device is configured to communicate with the user device using the first network address during the handover procedure.

In another example embodiment, the network destination device is configured to communicate with the user device using the first network address after the handover procedure is completed.

In another example embodiment, the network destination device is configured to communicate with the user device using only the first network address once the handover procedure is completed.

In another example embodiment, the user device communicates with the network destination device using the first network address after the handover procedure is completed.

In another example embodiment, the handover procedure is configured to keep the user device connected to the network destination device using the first network address during and for a predetermined time after the handover procedure is completed.

In another example embodiment, during the handover procedure, the network source device is configured to: request that the user device put the first network address connection into a low power mode; and stop scheduling/transmitting subsequent communication packets to the user device.

In another example embodiment, during the handover procedure, the network destination device is configured to: start arranging connection anchor point timing for scheduling to be applied to future communications with the user device; send a handover ready message indication to the network source device; and command the user device to exit the lower power mode to resume communication.

In another example embodiment, the network source device includes a first data base; and the network destination device includes a second data base.

In another example embodiment, the network destination device manages a connection with the user device and the first and second network addresses together in two separate data bases.

In another example embodiment, one of the two separate data bases is assigned to the first network address and another one of the two separate data bases is assigned to the second network address.

In another example embodiment, each of the two separate data bases include a separate set of connection parameters, bonding tables and piconet clock timings for each of the first and second network addresses.

In another example embodiment, the two separate data bases are two separate piconet data bases.

In another example embodiment, the network source device and the network destination device are configured for wireless communication with the user device.

In another example embodiment, the network addresses are MAC addresses.

In another example embodiment, the network addresses are BD (Bluetooth device) addresses.

In another example embodiment, both the network source device and the network destination device are configured to communicate with the user device over a Bluetooth connection.

In another example embodiment, the handover message is a Bluetooth handover message.

In another example embodiment, the handover procedure is a Bluetooth handover procedure.

In another example embodiment, the network destination device is configured not to communicate with the user device before receiving the handover message.

According to an example embodiment, a method of enabling a network destination device to be operated, comprising: distributing a set of instructions, stored on a non-transitory, tangible computer readable storage medium, for configuring the network destination device; wherein the instructions include: configuring the network destination device to receive a handover message from a network source device; wherein the network source device is identified by a first network address; wherein the network destination device is identified by a second network address; initiating a transfer of a user device from the network source device to the network destination device in response to the handover message; and configuring the network destination device to communicate with the user device using the first network address.

The above discussion is not intended to represent every example embodiment or every implementation within the scope of the current or future Claim sets. The Figures and Detailed Description that follow also exemplify various example embodiments.

Various example embodiments may be more completely understood in consideration of the following Detailed Description in connection with the accompanying Drawings.

### BRIEF DESCRIPTION OF THE DRAWINGS

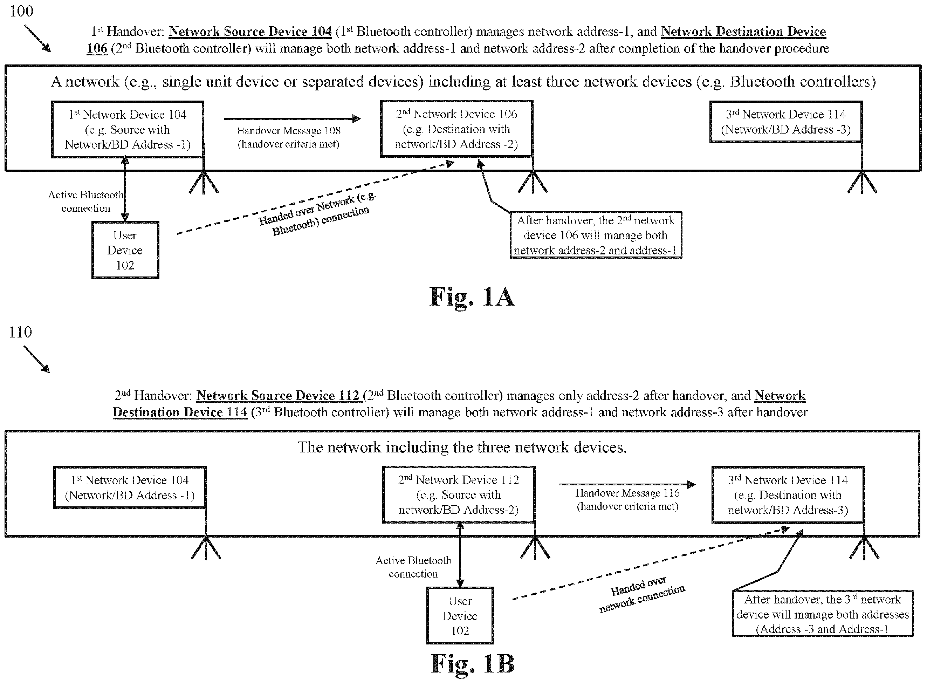

Figures 1A, 1B represent pictorial diagrams of example handover procedures for a user device from a network source device to a network destination device.
Figure 1A represents a first example pictorial diagram of a first example handover procedure for the user device from the network source device to the network destination device.
Figure 1B represents a second example pictorial diagram of a second example handover procedure for the user device from the network source device to the network destination device.
Figure 2 represents a first example set of instructions for enabling a handover procedure for a user device from a network source device to a network destination device.
Figures 3A, 3B, 3C, 3D represent a second example set of instructions for enabling a handover procedure for a user device from a network source device to a network destination device.

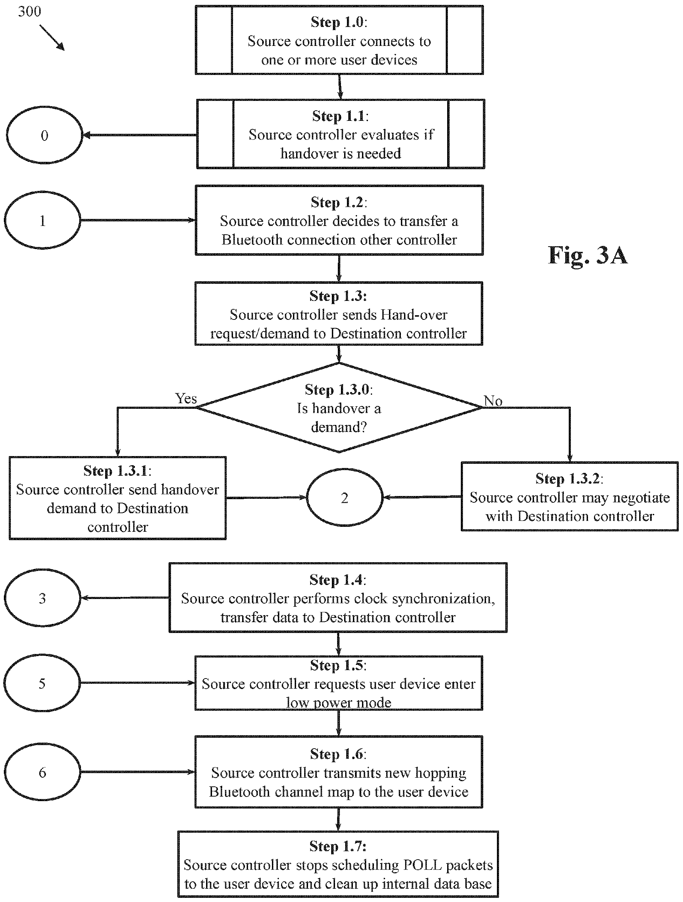

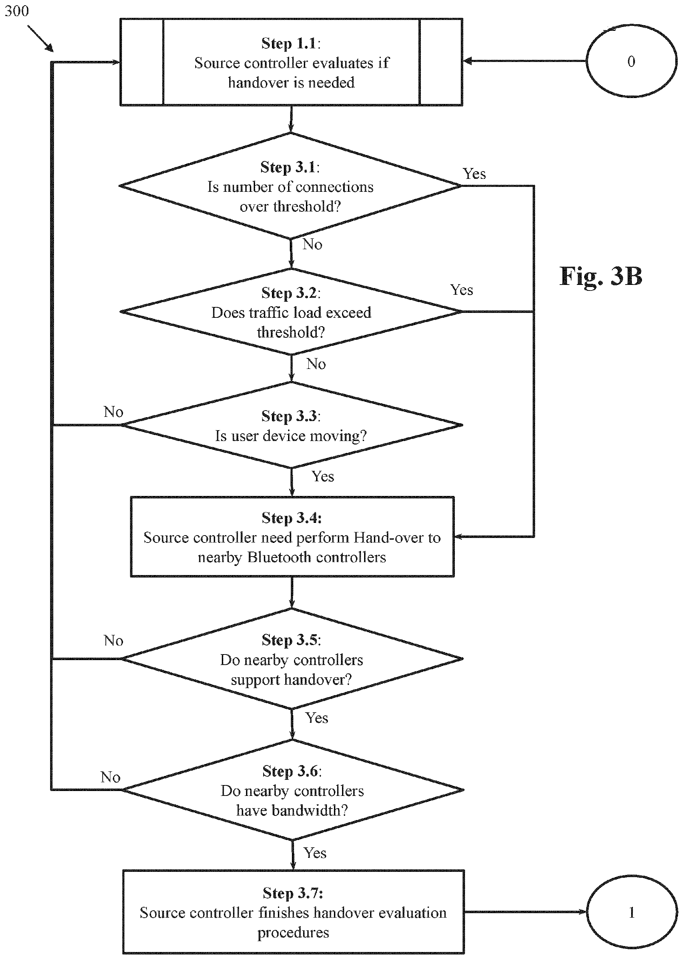

Figures 3A, 3B represent an example set of instructions (e.g. pseudo codes) for enabling the network source device.
Figure 3B represent an example set of instructions (e.g. pseudo codes) for enabling Step 1.1 in the example set of instructions for enabling the network source device.

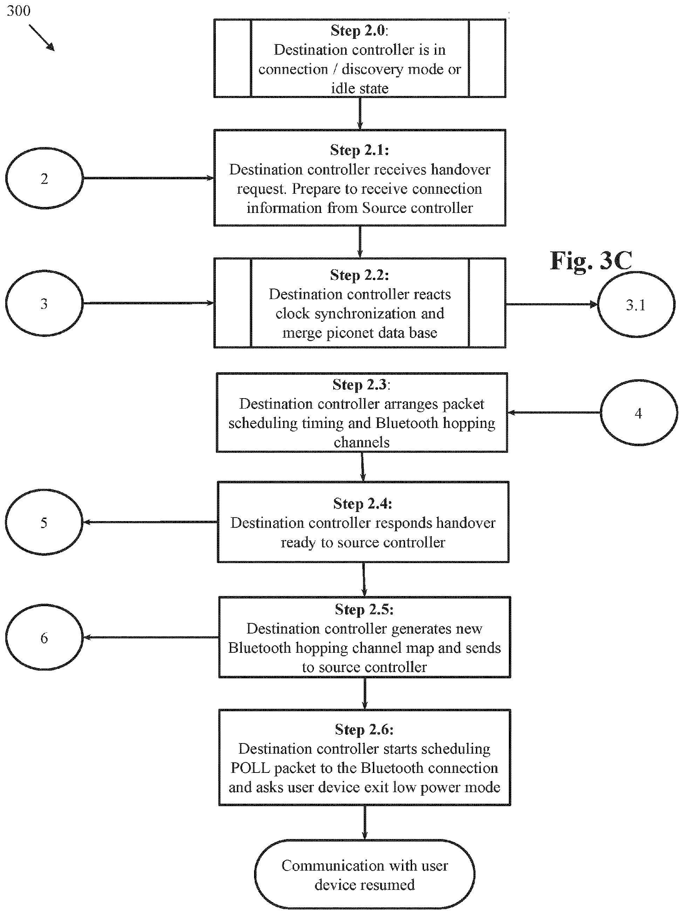

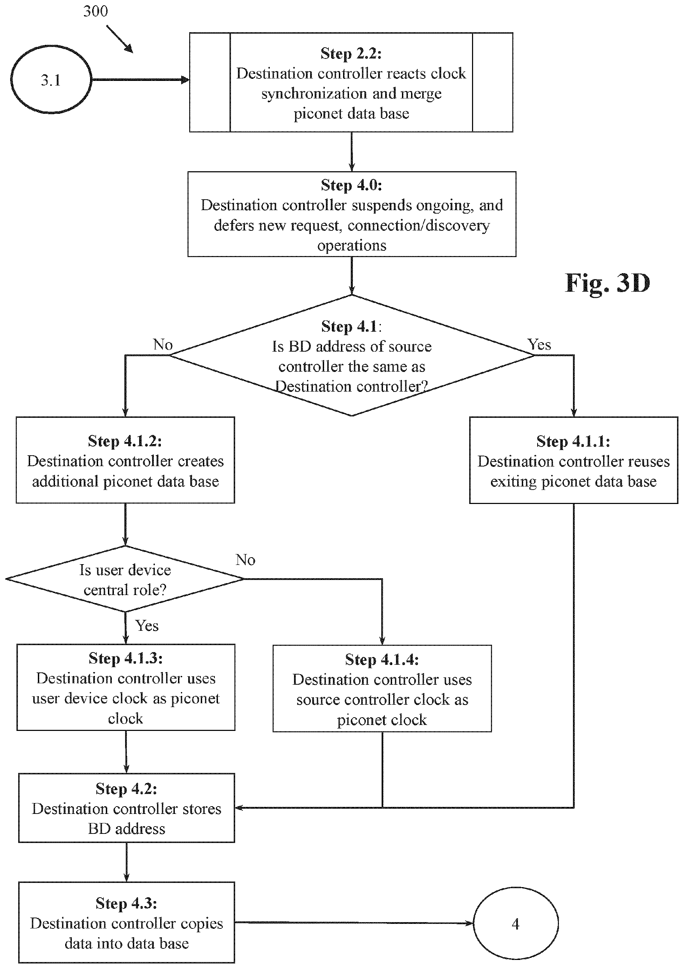

Figures 3C, 3D represent an example set of instructions (e.g. pseudo codes) for enabling the network destination device.
Figure 3D represent an example set of instructions (e.g. pseudo codes) for enabling Step 2.2 in the example set of instructions for enabling the network destination device.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the scope of the appended claims are covered as well.

### DETAILED DESCRIPTION

When handing over a user device's network connection (e.g. Bluetooth connection) from a first network device (e.g. Bluetooth controller) to a second network device (e.g. Bluetooth controller) , the user device must terminate a current established network connection (e.g. Bluetooth connection) with the first network device (e.g. Bluetooth controller) and then re-establish a new network connection (e.g. Bluetooth connection) with the second Bluetooth controller.

One way to avoid terminating and re-establishing Bluetooth connections, both the first and second network devices (e.g. Bluetooth controllers) could be pre-configured with a same network (e.g. MAC, network/BD (Bluetooth device) , etc.) address to perform the handover procedure. The same network/BD address approach however is likely not scalable because it would require the same network/BD address to be pre-configured in all those network devices (e.g. Bluetooth controllers) that the user device might communicate with.

Some other approaches pass LT address, channel information, and timing information when handing over a user device's network connection from a first network device to a second network device. In these approaches, the secondary Bluetooth enabled device uses the information passed by the primary Bluetooth enabled device. This information however may only be valid during the connection. Once connection is terminated, remote device can't reconnect to the "secondary Bluetooth enabled device" without repairing. The secondary Bluetooth enabled device also needs to monitor the data traffic on ACL/SCO/eSCO link between the primary Bluetooth enabled device and the remote device before hand-over. However, the secondary Bluetooth enabled device may not be able to properly decode/encode the data packet carried on ACL/SCO/eSCO link once a key refreshment happens.

Now discussed are network devices and a method for enabling seamless user device handover between multiple network (e.g. Bluetooth) devices without requiring handed over user device to terminate and re-establish its network connections, or requiring network devices to all use a same pre-configured network/BD address.

According to the discussion below, all network devices (e.g. Bluetooth controllers) accepting a handover procedure will still maintain their original (i.e. different) pre-configured network/BD addresses.

Using the user device handover procedure to be discussed, network/BD addresses (e.g. Bluetooth connections) are transferred from one network device (e.g. a network source device, source Bluetooth controller) to another network device (e.g. network destination device, destination Bluetooth controllers) without requiring the source and destination devices to have a same pre-configured network/BD address, without requiring any input from the user device to be handed over, and without encountering any network connection loss during the handover procedure.

In contrast to the handover procedures introduced above, now to be discussed are network devices and a method that passes network/BD address from one network device to another device. The rest of network connection related information between a user device and a network device is not really needed. For example, in the discussion to follow a secondary Bluetooth enabled device owns its own network/BD address as well as the primary Bluetooth enabled device's network/BD address. With the network/BD address of primary Bluetooth enabled device, the secondary Bluetooth enabled device can maintain, re-connect ACL/eSCO links with the same remote device without repairing. The encrypted packets carried on (ACL/SCO/eSCO) link will be successfully decoded and encoded with correct link key, after hand-over. Additionally, before hand-over, the secondary Bluetooth enabled device doesn't need monitor the data traffic on ACL/SCO/eSCO link between the primary Bluetooth enabled device and the remote device, in contrast to the devices discussed earlier.

The network devices and methods to be discussed below, enable seamless network connection (e.g. Bluetooth connection) handovers for user devices between multiple network devices (e.g. Bluetooth controllers).

Figures 1A, 1B represent pictorial diagrams 100, 110 of example handover procedures for a user device 102 from a network source device 104 to a network destination device 106. Figure 1A represents the first example pictorial diagram 100 of a first example handover procedure for the user device 102 from the network source device 104 to the network destination device 106. Figure 1B represents a second example pictorial diagram 110 of a second example handover procedure for the user device 102 from the network source device 112 to the network destination device 114.

The 1st network device 104 (e.g. network source device assigned network/BD address-1) connects to the user device 102 (showed as solid arrowed line). Whenever meeting a set of handover criteria and requesting handover, the network source device 104 initiates a handover procedure by sending a request to the 2nd network device 106 (e.g. network destination device assigned network/BD address-2).

After getting a positive response from network destination device 106, the network source device 104 shall transfer the network/BD address (of the user device 102 and of the network source device 104) , connection parameters, bonding table and piconet clock timing information for the connection to network destination device 106. Showed as an arrowed line in the drawing.

The network destination device 106 creates one additional central piconet data base to store information transferred by network source device 104. The additional central piconet data base may be managed by network destination device 106 separately from, or combined with, an original central piconet data base.

After the information transfer completes, the network source device 104 requests the user device 102 to put the first network address connection into a low power mode, and then stops scheduling/transmitting subsequent communication packets to the user device 102. The network destination device 106 then starts arranging connection anchor point timing for scheduling to be applied to future communications with the user device 102. Then the network destination device 106 sends a handover ready message indication to network source device 104. The network destination device 106 then commands the user device 102 exit the lower power mode to resume communication (shown as a dotted line).

The handover procedure is truly transparent to user device 102, so the user device 102 could be moved from the original network source device 104 to other network devices (e.g. 2^{nd} network device 106, 3^{rd} network device 114, etc.) one after another without preconfiguring a same network/BD address to all destination network devices 106, 114.

Communication medias used for exchanging network messages and transferring information between the two network devices include at least: Ethernet, hard-wired circuits, Inter-CPU communication buses, shared memory access, and wireless radios.

In various example embodiments, the user device 102 includes at least one of a: phone, head-set, HID including Bluetooth mouse, Bluetooth speakers, gaming joysticks/consoles, any Bluetooth certified devices, or any other network connectable device.

The network source device 104 decides to which network device (e.g. Bluetooth controller) and when a handover of network address (e.g. Bluetooth connection) shall be taken, and the network destination device 106 decides how the handed-over network connection (e.g. Bluetooth connection) shall be integrated and when to complete.

The network destination device 106 manages the handed-over network connection (e.g. Bluetooth connection) and originally existing network connections (e.g. Bluetooth connections) together but in two separate central piconet data bases with corresponding different network/BD address respectively. The connection parameters, bonding tables and piconet clock timings of both the first and second network connections are independently managed.

Thus a network connection to the user device 102 is always active even when the network connection is switching/roaming between various network devices 106, 114 (e.g. Bluetooth controllers). The exact serving network device 104, 106, 114 (e.g. Bluetooth controller) is transparent to the user device 102.

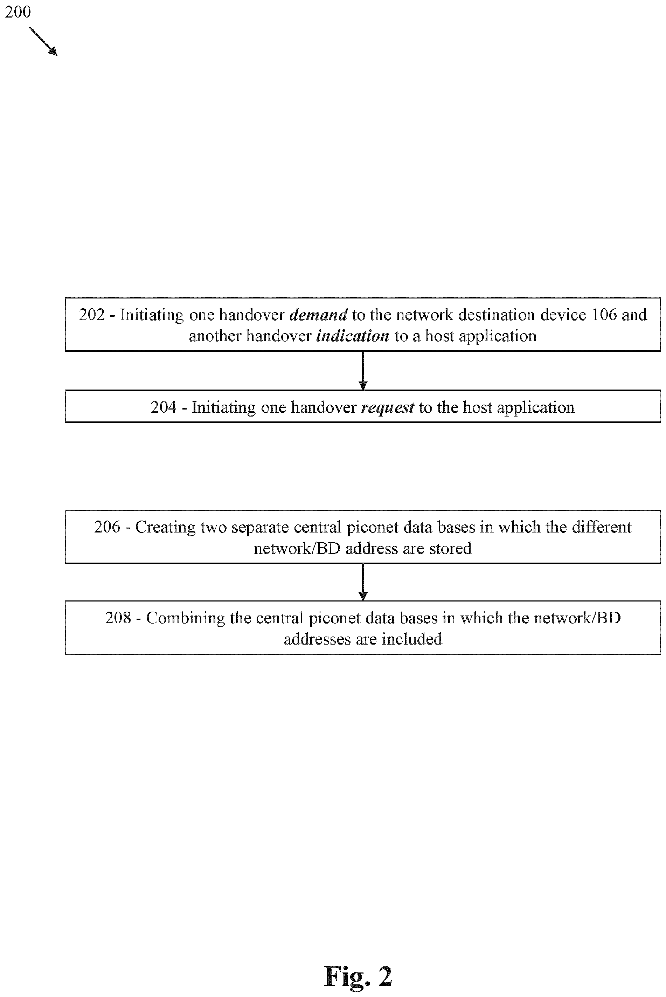

Figure 2 represents a first example set of instructions 200 for enabling a handover procedure for the user device 102 from the network source device 104 to the network destination device 106, 114.

The order in which the instructions are discussed does not limit the order in which other example embodiments implement the instructions unless otherwise specifically stated. Additionally, in some embodiments the instructions are implemented concurrently.

An example instruction set for initiating handover request and data transfer from the network source device 104 begins in 202, by initiating one handover demand to the network destination device 106 and another handover indication to a host application. In this approach, the network source device 104 actively demands handover actions from network destination device 106, which is allowed to reject.

Next, in 204, initiating one handover request to the host application. In this approach, network source device 104 shall receive a handover response from the host applications and then take actions to transfer data to network destination device 106.

An example instruction set for managing multiple central piconet data bases in network destination devices 106 begins in 206, by creating two separate central piconet data bases in which the different network/BD address are stored. The transmission anchor point timing of all network connections (e.g. Bluetooth connections) are maintained independently in this approach. The network connection (e.g. Bluetooth connection) handed over from original network source device 104 shall retain original anchor point timing.

Next, in 208, combining the central piconet data bases in which the network/BD addresses are included. The transmission anchor point timing of all network connections (e.g. Bluetooth connections) are combined and rearranged in this approach. The network connection (e.g. Bluetooth connection) handed over from original network source device 104 shall adapt to the anchor point timing scheduled by the network destination device 106.

Figures 3A, 3B, 3C, 3D represent a second example set of instructions 300 for enabling a handover procedure for the user device 102 from the network source device 104 to the network destination device 106, 114.

Figures 3A, 3B represent an example set of instructions (e.g. pseudo codes) for enabling the network source device 104.

Step 1.0: The source network device (e.g. Bluetooth controller) (with network/BD address-1) establishes a network connection (e.g. Bluetooth connection) connecting to a user device 102.

Step 1.1: The network source device 104 evaluates if handover action is needed and to which controller the handover shall happen. Refer to source network device (e.g. Bluetooth controller) handover evaluation flow procedures.

Step 1.2: The network source device 104 receives evaluation results indicating that handover to other controllers is needed.

Step 1.3: The network source device 104 sends handover demand/request to the identified destination Bluetooth controller. Step 1.3.1: If it's a handover demand, then network destination device 106 shall prepare to take handover actions right away. Refer to destination network device (e.g. Bluetooth controller) handover functional flow procedures. Step 1.3.2: If it's a handover request, then network destination device 106 may negotiate with network source device 104. If the network destination device 106 rejects the request, the network source device 104 shall repeat the step 1.3 to next identified Bluetooth controller.

Step 1.4: The network source device 104 performs clock synchronization, transfers network/BD addresses (of the user device 102 and of the network source device 104) , copies connection parameters, bonding tables and scheduling patterns, via shared memory or communication medias between the two transceivers, to network destination device 106.

Step 1.5: Upon receipt of handover ready response from network destination device 106, the network source device 104 requests the user device 102 entering Bluetooth low power mode.

Step 1.6: Upon receipt of new hopping Bluetooth channel maps from the network destination device 106, the network source device 104 transmits the channel maps to the user device 102 which is in lower-power mode.

Step 1.7: The network source device 104 stops scheduling POLL packet and starts cleaning up internal data base for the handed-over Bluetooth connection.

Figure 3B represent an example set of instructions (e.g. pseudo codes) for enabling Step 1.1 in the example set of instructions for enabling the network source device 104.

Step 3.1: The network source device 104 counts if the number of active network connections (e.g. Bluetooth connections) in the controller exceeds the threshold.

Step 3.2: The network source device 104 calculates if the total traffic load in the controller exceeds the threshold.

Step 3.3: The network source device 104 detects the movement of the user device 102 may go beyond the current coverage range.

Step 3.4: The network source device 104 receives evaluation results indicating that handover to other controllers is needed.

Step 3.5: The network source device 104 checks if and how many nearby Bluetooth devices are capable of support the handover procedures.

Step 3.6: The network source device 104 queries if there is any Bluetooth device, which is capable of support the handover, still have bandwidth to accept additional Bluetooth connection.

Step 3.7: Upon evaluation result against above steps, positive or negative indication is returned to step 1.2 of Source network device (e.g. Bluetooth controller) functional flow procedures.

Figures 3C, 3D represent an example set of instructions (e.g. pseudo codes) for enabling the network destination device 106, 114.

Step 2.0: The destination network device (e.g. Bluetooth controller) (with network/BD address-2) may manage other Bluetooth connections, or in discovery mode, or in idle state.

Step 2.1: After receipt of handover request/demand from network source device 104, the network destination device 106 is ready to receive all information to be sent by the network source device 104.

Step 2.2: The network destination device 106 reacts clock synchronization and merges piconet database. Refer to destination network device (e.g. Bluetooth controller) Integrate handed-over connection flow procedures.

Step 2.3: The network destination device 106 arranges packet scheduling timing and new Bluetooth hopping channels accordingly.

Step 2.4: The network destination device 106 responds handover ready to source destination.

Step 2.5: The network destination device 106 generates new Bluetooth hopping channel map and send to network source device 104.

Step 2.6: The network destination device 106 starts scheduling POLL packets and asks user device 102 exit low power mode. Communication with user device 102 is resumed.

Figure 3D represent an example set of instructions (e.g. pseudo codes) for enabling Step 2.2 in the example set of instructions for enabling the network destination device 106, 114.

Step 4.0: The network destination device 106 suspends ongoing, and defers newly requested, Bluetooth connection/discovery activities.

Step 4.1: The network destination device 106 checks if network/BD address of the network source device 104 is different from the network/BD address being used by local controller.

Step 4.1.1: If the network/BD address is identical, then reuse the existing piconet central data base.

Step 4.1.2: If the network/BD address is different, then create an additional piconet central data base. Further checking will be done against Bluetooth role.

Step 4.1.3: If the user device 102 is central role on the Bluetooth connection, the network destination device 106 will use the user device 102's clock instant as piconet clock in the new piconet data base.

Step 4.1.4: If the user device 102 is peripheral role on the Bluetooth connection, the network destination device 106 will sync up with the network source device's 104 clock instance as piconet clock in the data base.

Step 4.2: The network destination device 106 copies the clock synchronization, stores network source device 104 network/BD address, user device's 102 network/BD address, connection parameters and bonding tables.

Step 4.3: After completing the data base clone procedures, the flow is returned to step 2.3 of Destination network device (e.g. Bluetooth controller) functional flow procedures.

The network devices and methods discussed above can be used in products that include either a Bluetooth classic and/or Bluetooth LE controller, either as a receiving device or transmitting device with central and peripheral roles.

The network devices and methods discussed above can also be used in products that include a Bluetooth user device 102 roaming capability, which can be used to roam a Bluetooth certified device from one network device (e.g. Bluetooth controller) to any other Bluetooth controller, back and forth, in reachable range.

A first example application using the network devices and methods discussed above load-balance use cases. For example, a hospital medical monitoring device equipped with multiple Bluetooth controllers. Most medical personals may just do Bluetooth pairing once with one of the controllers without knowing/caring which exact controller is. One day and one occasion, more than expected number of medical personals approach and connect to the medical device at the same time. In the moment, the network devices and methods discussed above are able to detect the need of handover, then switch some network/BD addresses (e.g. Bluetooth connections) for some personals' Bluetooth devices among the available controllers in the device. This method shall offload the traffic load between those medical personals' Bluetooth device and medical monitoring device.

In this first example, medical personals won't feel any service interrupt or concern need of connection re-establishment because the handover procedures are performed among network devices (e.g. Bluetooth controllers) without intercepting the communication with the personals' Bluetooth devices.

A second example application using the network devices and methods discussed above can be applied to hot-swap use cases. For example, an alarming device equipped with two Bluetooth controllers. The alarming device often is used to alert certain critical conditions and report detected conditions to networks or system. Such device could be used for elder health care. If one of the controller in the alarming device fails for unknown reason, the network devices and methods discussed above may detect the condition and switch the network connection (e.g. Bluetooth connection) to another controller so that the network connection (e.g. Bluetooth connection) is always connected to avoid possible faulty conditions.

In this second example, users of the alarming device won't worry about the intercept of the service. The service of the device, relying on the network connection (e.g. Bluetooth connection) will remain connected.

A third example application using the network devices and methods discussed above can be applied to short-range-roaming use cases. Roaming a user Bluetooth device from one location to another location within reachable range is good use of this method. For example, in a wedding party hosted outside, some Bluetooth devices to serve privacy uses for privileged guests' Bluetooth devices may be connected in a network. To keep exciting events running and private conversions exchanging occur simultaneously, the network devices and methods discussed above may provide limited roaming ability to peoples who are using the featuring services.

In this third example, the guests could move around in the party site. The method shall automatically perform handover among the serving Bluetooth devices, so the network connections (e.g. Bluetooth connections) between the guests Bluetooth device and network could always remain as connected without warrying about the location, termination of Bluetooth connections, and hassles of re-connection.

Various systems, such as the network devices just discussed, can host these instructions. Such systems can include an input/output data interface, a processor, a storage device, and a non-transitory machine-readable storage medium. The machine-readable storage medium includes the instructions which control how the processor receives input data and transforms the input data into output data, using data within the storage device. The machine-readable storage medium in an alternate example embodiment is a non-transitory computer-readable storage medium. In other example embodiments the set of instructions described above can be implemented either using logic gates, application specific chips, firmware, as well as other hardware forms.

The instructions/steps in the above Figures can be executed in any order, unless explicitly limited to a specific order. The reference labeling order of the instructions/steps should not be interpreted as limiting the instructions/steps to that particular reference labeling order. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions described above are implemented as functional and software instructions. In other embodiments, the instructions can be implemented either using logic gates, application specific chips, firmware, as well as other hardware forms.

When the instructions are embodied as a set of executable instructions in a non-transitory computer-readable or computer-usable media which are effected on a computer or machine programmed with and controlled by said executable instructions. Said instructions are loaded for execution on a processor (such as one or more CPUs) . Said processor includes microprocessors, microcontrollers, processor modules or subsystems (including one or more microprocessors or microcontrollers) , or other control or computing devices. A processor can refer to a single component or to plural components. Said computer-readable or computer-usable storage medium or media is (are) considered to be part of an article (or article of manufacture) . An article or article of manufacture can refer to any manufactured single component or multiple components. The non-transitory machine or computer-usable media or mediums as defined herein excludes signals, but such media or mediums may be capable of receiving and processing information from signals and/or other transitory mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In this specification, example embodiments have been presented in terms of a selected set of details. However, a person of ordinary skill in the art would understand that many other example embodiments may be practiced which include a different selected set of these details. It is intended that the following claims cover all possible example embodiments.

It will be readily understood that the components of the embodiments as generally described herein and illustrated in the appended figures could be arranged and designed in a wide variety of different configurations. Thus, the detailed description of various embodiments, as represented in the figures, is not intended to limit the scope of the present disclosure, but is merely representative of various embodiments. While the various aspects of the embodiments are presented in drawings, the drawings are not necessarily drawn to scale unless specifically indicated.

The present invention may be embodied in other specific forms without departing from its essential characteristics. The described embodiments are to be considered in all respects only as illustrative and not restrictive. The scope of the invention is, therefore, indicated by the appended claims rather than by this detailed description. All changes which come within the meaning and range of equivalency of the claims are to be embraced within their scope.

Reference throughout this specification to features, advantages, or similar language does not imply that all of the features and advantages that may be realized with the present invention should be or are in any single embodiment of the invention. Rather, language referring to the features and advantages is understood to mean that a specific feature, advantage, or characteristic described in connection with an embodiment is included in at least one embodiment of the present invention. Thus, discussions of the features and advantages, and similar language, throughout this specification may, but do not necessarily, refer to the same embodiment.

Furthermore, the described features, advantages, and characteristics of the invention may be combined in any suitable manner in one or more embodiments. One skilled in the relevant art will recognize, in light of the description herein, that the invention can be practiced without one or more of the specific features or advantages of a particular embodiment. In other instances, additional features and advantages may be recognized in certain embodiments that may not be present in all embodiments of the invention.

Reference throughout this specification to "one embodiment," "an embodiment," or similar language means that a particular feature, structure, or characteristic described in connection with the indicated embodiment is included in at least one embodiment of the present invention. Thus, the phrases "in one embodiment," "in an embodiment," and similar language throughout this specification may, but do not necessarily, all refer to the same embodiment.

## Claims

1. A network destination device, comprising:
wherein the network destination device is configured to receive a handover message from a network source device;
wherein the network source device is identified by a first network address;
wherein the network destination device is identified by a second network address;
wherein the handover message is configured to initiate a transfer of a user device from the network source device to the network destination device; and
wherein the network destination device is configured to communicate with the user device using both the first network address and the second network address.

2. The network destination device of claim 1:
wherein the network destination device is configured to communicate with the user device using the first network address after receiving the handover message.

3. The network destination device of claim 1 or claim 2:
wherein the handover message triggers a handover procedure between the network source device and the network destination device.

4. The network destination device of claim 3:
wherein the network destination device is configured to communicate with the user device using the first network address during the handover procedure.

5. The network destination device of claim 3:
wherein the network destination device is configured to communicate with the user device using the first network address after the handover procedure is completed.

6. The network destination device of claim 3:
wherein the network destination device is configured to communicate with the user device using only the first network address once the handover procedure is completed.

7. The network destination device of claim 3:
wherein the user device communicates with the network destination device using the first network address after the handover procedure is completed.

8. The network destination device of claim 3:
wherein the handover procedure is configured to keep the user device connected to the network destination device using the first network address during and for a predetermined time after the handover procedure is completed.

9. The network destination device of claim 3:
wherein during the handover procedure, the network source device is configured to:
request that the user device put the first network address connection into a low power mode; and
stop scheduling/transmitting subsequent communication packets to the user device.

10. The network destination device of claim 9:
wherein during the handover procedure, the network destination device is configured to:
start arranging connection anchor point timing for scheduling to be applied to future communications with the user device;
send a handover ready message indication to the network source device; and
command the user device to exit the lower power mode to resume communication.

11. The network destination device according to any preceding claim:
wherein the network source device includes a first data base; and
wherein the network destination device includes a second data base.

12. The network destination device according to any preceding claim:
wherein the network destination device manages a connection with the user device and the first and second network addresses together in two separate data bases.

13. The network destination device of claim 12:
wherein one of the two separate data bases is assigned to the first network address and another one of the two separate data bases is assigned to the second network address.

14. The network destination device of claim 12:
wherein each of the two separate data bases include a separate set of connection parameters, bonding tables and piconet clock timings for each of the first and second network addresses.

15. Method of enabling a network destination device to be operated, comprising:
distributing a set of instructions, stored on a non-transitory, tangible computer readable storage medium, for configuring the network destination device;
wherein the instructions include:
configuring the network destination device to receive a handover message from a network source device;
wherein the network source device is identified by a first network address;
wherein the network destination device is identified by a second network address;
initiating a transfer of a user device from the network source device to the network destination device in response to the handover message;
configuring the network destination device to communicate with the user device using the first network address.
